# EUROPÄISCHE PATENTSCHRIFT

(11) **EP 2 886 402 B1**
(45) Veröffentlichungstag und Bekanntmachung des Hinweises auf die Patenterteilung: **29.06.2016**
(21) Anmeldenummer: 14194275.5
(22) Anmeldetag: 21.11.2014
(51) Int. Cl.: B60R 25/0215

(54) **Antriebsträger für eine Antriebseinheit und elektrische Lenkverriegelung mit einem solchen Antriebsträger**
Drive mount for a drive unit, and electrical steering lock with such a drive mount
Support d'entraînement pour une unité d'entraînement et verrouillage électrique de direction doté d'un tel support d'entraînement

(30) Priorität: 23.12.2013 DE 102013114788
(43) Veröffentlichungstag der Anmeldung: 24.06.2015
(73) Patentinhaber: Huf Hülsbeck & Fürst GmbH & Co. KG, 42551 Velbert (DE)
(72) Erfinder: Zillmann, Horst, 81243 München (DE)
(74) Vertreter: Zenz Patentanwälte Partnerschaft mbB

(56) Entgegenhaltungen:
- DE-A1-102011 120 015
- DE-C1- 10 109 609
- US-A1- 2002 088 257
- US-A1- 2006 053 921
- US-A1- 2010 083 716

## Beschreibung

Die Erfindung richtet sich auf einen Antriebsträger für eine Antriebseinheit, insbesondere für eine elektrische Lenkverriegelung, aufweisend ein plattenförmiges Strukturelement mit einem Aufnahmerahmen, der einen Antriebsmotor der Antriebseinheit lagefest aufnehmen kann, und einer Lagerstütze, die das freie Ende einer mit dem Antriebsmotor gekoppelten Antriebsschneckenwelle drehbar lagern kann, und ein Anschlagelement, welches zumindest eine axiale Bewegung der Antriebsschneckenwelle einschränken kann, wobei das Anschlagelement eine erste Anschlagfläche, welche zwischen dem Aufnahmerahmen und der Lagerstützte des Strukturelements angeordnet ist, und eine zweite Anschlagfläche, welche nach Art eines Axialanschlags für das dem freien Ende der Antriebsschneckenwelle zugewandte Ende der Schneckenwendel dienend ausgebildet ist, aufweist.

Ebenso richtet sich die vorliegende Erfindung auf eine elektrische Lenkverriegelung für ein Kraftfahrzeug, aufweisend eine Antriebseinheit, die einen Antriebsmotor und eine Antriebsschneckenwelle umfasst, ein mit der Antriebsschneckenwelle bewegungsgekoppeltes Antriebsrad und einen mit dem Antriebsrad verbundenen Sperrbolzen.

Ein Antriebsträger und eine elektrische Lenkverriegelung der eingangs genannten Art sind zum Beispiel aus der DE 101 09 609 C1 bekannt. Bei dieser bekannten Lenkverriegelung dient ein einstückig ausgebildetes Gehäusebauteil als Antriebsträger und nimmt die Antriebseinheit auf. Zu diesem Zweck weist dieser Antriebsträger bzw. das Gehäusebauteil mit seiner plattenförmigen Struktur entsprechende Ausnehmungen auf, von denen eine den Antriebsmotor der Antriebseinheit lagefest trägt und von denen eine weitere die Antriebsschneckenwelle drehbar lagert. Die mechanischen Belastungen durch die Antriebseinheit und Temperaturschwankungen müssen bei der Wahl des Materials des Gehäusebauteils bzw. des Antriebsträgers berücksichtigt werden, damit die Festigkeit und eine sichere Funktionsweise des zum Beispiel in einer Lenkverriegelung eingesetzten Antriebsträgers gewährleistet ist. Denn Temperaturschwankungen können zu einer leichten Verformung der Bauteile der Lenkverriegelung führen, wodurch schnell eine erlaubte Toleranz überschritten ist und eine sichere Funktionsweise der Lenkverriegelung nicht mehr gewährleistet ist.

Ferner ist aus der US 2006/0053921A eine Lenkverriegelung mit einem einstückigen Antriebsträger aus Kunststoff bekannt.

Der Erfindung liegt die Aufgabe zugrunde eine Lösung zu schaffen, die auf konstruktiv einfache Weise eine verbesserte Lenkverriegelung bereitstellt, die kostengünstig in ihrer Herstellung ist und ein hohes Maß an Funktionssicherheit aufweist.

Bei einem Antriebsträger der eingangs bezeichneten Art wird die Aufgabe erfindungsgemäß dadurch gelöst, dass das Anschlagelement an dem plattenförmigen Strukturelement demontierbar befestigt ist und dass das Strukturelement aus einem anderen Material als das Anschlagelement hergestellt ist, dass das Strukturelement aus Kunststoff hergestellt ist und dass das Anschlagelement aus Metall oder einer Metalllegierung hergestellt ist.

Ebenso wird die vorstehende Aufgabe bei einer elektrischen Lenkverriegelung der eingangs bezeichneten Art durch einen zumindest die Antriebseinheit tragenden Antriebsträger nach Anspruch 1 gelöst. Hierbei weist die erfindungsgemäße elektrische Lenkverriegelung den Antriebsträger auf, bei welchem der Aufnahmerahmen den Antriebsmotor der Antriebseinheit lagefest aufnimmt und bei dem die Lagerstütze das freie Ende der mit dem Antriebsmotor gekoppelten Antriebsschneckenwelle drehbar lagert, wobei das Anschlagelement eine axiale Bewegung der Antriebsschneckenwelle einschränkt. Die dritte Anschlagfläche des Anschlagelements kann in Verlängerung der Antriebsschneckenwelle hinter deren freien Ende angeordnet sein, so dass eine Auslenkung der Antriebsschneckenwelle in dieser Richtung verhindert wird.

Vorteilhafte und zweckmäßige Ausgestaltungen und Weiterbildungen der Erfindung ergeben sich aus den Unteransprüchen.
Durch die Erfindung werden ein Antriebsträger und eine elektrische Lenkverriegelung zur Verfügung gestellt, welche sich durch eine einfache, kompakte und preisgünstige Bauweise auszeichnen. Aufgrund des modularen Aufbaus des Antriebsträgers können das Strukturelement und das Anschlagelement entsprechend ihrer mechanischen Beanspruchung aus unterschiedlichen Materialien hergestellt sein, so dass das Strukturelement zum Beispiel kostengünstig im Spritzgussverfahren hergestellt ist, wohingegen für das Anschlagelement, welches wesentlich höheren Beanspruchungen Stand halten muss, ein aufwendigeres Herstellungsverfahren zum Einsatz kommt. Neben der mechanischen Belastung müssen bei der Materialauswahl Temperaturschwankungen berücksichtigt werden, wobei es unbedingt zu vermeiden ist, dass der für die Verriegelung und Entriegelung verantwortliche Teil des Antriebsträgers infolge sich ändernder Temperaturen derart verformt wird, dass die Funktionsweise beeinträchtigt ist. Darüber hinaus wird durch die Kombination unterschiedlicher und damit unterschiedlich schwerer Materialien insgesamt für den erfindungsgemäßen Antriebsträger und damit für die elektrische Lenkverriegelung eine vorteilhafte Gewichtsreduktion erzielt. Für das Strukturelement eignet sich aus Kostengründen ein thermoplastischer Kunststoff, wie zum Beispiel PBT, Polyamid, Polypropylen, Polycarbonat oder ein anderer geeigneter Kunststoff. Hingegen ist für das Anschlagelement ein Material mit einer hohen Festigkeit und mit gleichzeitig geringer Wärmeausdehnung erforderlich, so dass als Werkstoff beispielsweise eine Zinklegierung wie Zamak in Betracht kommt.

Um die Bewegungsfreiheit des freien Wellenendes der Antriebsschneckenwelle in Radialrichtung - zur Gewährleistung der Funktionssicherheit des Antriebsträgers und damit der elektrischen Lenkverriegelung - einzugrenzen, sieht die Erfindung in weiterer Ausgestaltung vor, dass das Anschlagelement eine dritte Anschlagfläche aufweist, die nach Art eines Radialanschlags eine Bewegung des freien Endes der Antriebsschneckenwelle radial zu deren Längserstreckung verhindernd ausgebildet ist.

Die axiale Bewegungsfreiheit der Schneckenwendel ist in vorteilhafter Ausgestaltung der Erfindung dadurch eingeschränkt, dass die dritte Anschlagfläche mit Bezug auf die Längserstreckung der Antriebsschneckenwelle zwischen der ersten Anschlagfläche und der zweiten Anschlagfläche angeordnet ist, wobei die Schneckenwendel zwischen der ersten und dritten Anschlagfläche angeordnet ist. Während der Antriebsmotor in dem Aufnahmerahmen des Strukturelements untergebracht ist und dort im Wesentlichen in Bezug auf das Strukturelement ohne Änderung seiner Lage, also lagefest, während seines Betriebs angeordnet ist, kann es infolge der mechanischen Kräfte beim Ent- und Verriegelung für die Antriebsschneckenwelle zu einer Verschiebung in Achsrichtung kommen, was jedoch durch das erfindungsgemäße Anschlagelement auf ein tolerierbares und verschwindend geringes Maß reduziert wird.

Zur Erhöhung der Kompaktheit des Antriebsträgers und zur Minimierung seines Einbauraumes sieht die Erfindung in Ausgestaltung vor, dass die Lagerstütze einen seitlichen Schlitz aufweist, in welchen die zweite Anschlagfläche des Anschlagelements zur axialen Bewegungsbegrenzung der Antriebsschneckenwelle eingeschoben ist.

Die Funktionalität des Anschlagelements kann dadurch erhöht werden, wenn das Anschlagelement im Wesentlichen U-förmig mit einem ersten Schenkel, einem dem ersten Schenkel gegenüberliegenden zweiten Schenkel und einem den ersten Schenkel mit dem zweiten Schenkel verbindenden Steg ausgebildet ist, wobei der erste Schenkel des U-förmigen Anschlagelements die Antriebsschneckenwelle zu der dem plattenförmigen Strukturelement abgewandten Seite überdeckt. Dabei deckt der Steg, welcher die beiden Schenkel des U-förmigen Anschlagelements miteinander verbindet, den seitlichen Bereich der Antriebsschneckenwelle ab, so dass zusätzlich zu der Bewegungsbegrenzung der Antriebsschneckenwelle diese auch gegenüber einem gewaltsamen Zugriff geschützt ist, wodurch das Anschlagelement infolge seiner die Antriebsschneckenwelle überdeckenden Ausbildung einen Diebstahlschutz bereitstellt.

Zur einfachen und schnellen Anbringung und Demontage des Anschlagelements an und von dem Strukturelement sieht die Erfindung ferner vor, dass der zweite Schenkel des U-förmigen Anschlagelements auf der der Antriebsschneckenwelle abgewandten Seitenfläche des plattenförmigen Strukturelements angeordnet ist und dort mit Hilfe von Rastmitteln mit dem Strukturelement in Eingriff steht. Der erste Schenkel erstreckt sich hierbei parallel zu dem zweiten Schenkel. Durch diese Anordnung des U-förmigen Anschlagelements und des Strukturelements ist die Antriebsschneckenwelle an drei Seiten überdeckt und damit vor einem unerwünschten Zugriff von außen geschützt.

Hinsichtlich einer kompakten Bauform des Antriebsträgers ist es von besonderem Vorteil, wenn die erste Anschlagfläche und/oder die dritte Anschlagfläche am Steg des Anschlagelements angeformt sind und sich im Wesentlichen parallel zum ersten und zweiten Schenkel erstrecken. Ebenso führt es zu einer kompakten Bauform, wenn die zweite Anschlagfläche an dem zweiten Schenkel angeformt ist und sich in Richtung des ersten Schenkels erstreckt.

In weiterer Ausgestaltung der erfindungsgemäßen elektrischen Lenkverriegelung und des Antriebsträgers ist vorgesehen, dass die erste Anschlagfläche des Anschlagelements eine im Wesentlichen parallel zum plattenförmigen Strukturelement verlaufende und eine Bewegung der Antriebsschneckenwelle senkrecht zum plattenförmigen Strukturelement blockierende Aufnahmeausnehmung aufweist, in welche ein zwischen der Schneckenwendel und dem Antriebsmotor liegender Abschnitt der Antriebsschneckenwelle angeordnet ist. Die Aufnahmeausnehmung dient im normalen Betrieb lediglich als eine Art Führung oder Abstützung, wohingegen sie bei Belastung und Auslenkung der Antriebsschneckenwelle eine Bewegung der Welle in Richtung des Antriebsmotors und in eine Richtung quer zum Strukturelement verhindert.

Schließlich sieht die Erfindung in weiterer Ausgestaltung vor, dass ein das freie Ende aufweisender wendelfreier Abschnitt der Antriebsschneckenwelle zwischen dem plattenförmigen Strukturelement und der dritten Anschlagfläche angeordnet ist, so dass eine Bewegung des freien Endes der Antriebsschneckenwelle aus der Lagerstütze heraus mit Hilfe der dritten Anschlagfläche blockiert ist. Die dritte Anschlagfläche dient somit dazu, eine eine Bewegung quer zum Strukturelement und von diesem fort, d.h. eine Bewegung aus der Lagerstützte heraus - zu verhindern. Dabei erstreckt sich die dritte Anschlagfläche parallel zu der ersten Anschlagfläche, wobei beide Anschlagflächen (erste und dritte) parallel zu dem Strukturelement verlaufend ausgebildet sind.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 in perspektivischer Ansicht eine elektrische Lenkungsverriegelung mit ihren wichtigsten Bauteilen,
Figur 2 eine Perspektivansicht auf einen eine Antriebseinheit tragenden Antriebsträger der elektrischen Lenkungsverriegelung,
Figur 3 die Antriebseinheit in perspektivischer Ansicht,
Figur 4 den Antriebsträger in einer perspektivischen Einzelteildarstellung,
Figur 5 den Antriebsträger in einer weiteren perspektivischen Einzelteildarstellung und
Figur 6 eine Schnittansicht von Antriebsträger und Antriebseinheit.

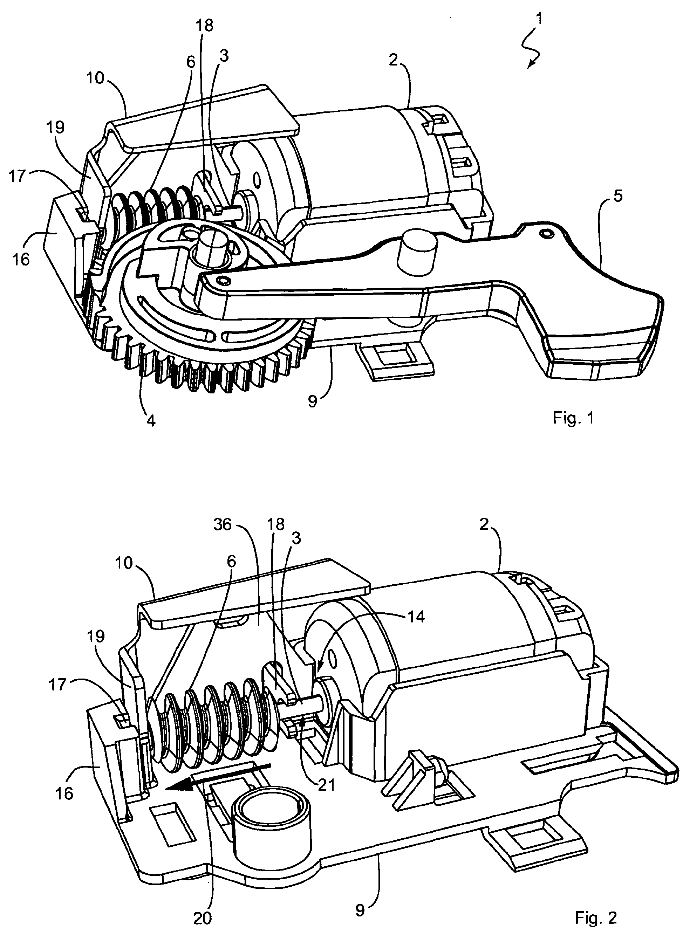

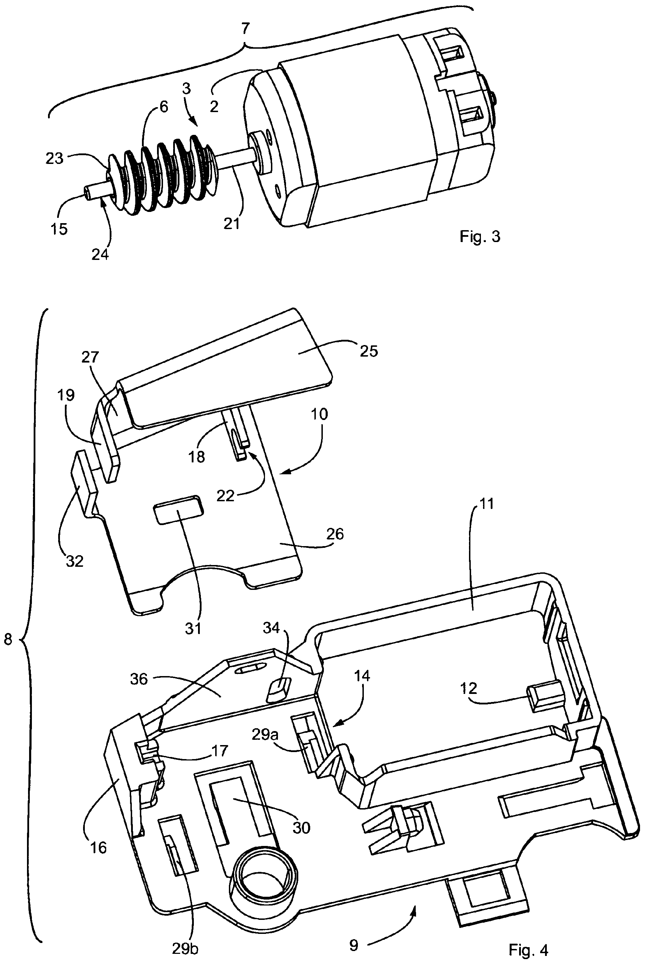

In Figur 1 sind die für die Erfindung wesentlichen Bauteile einer elektrischen Lenkverriegelung 1 für ein Kraftfahrzeug in perspektivischer Ansicht dargestellt. Die elektrische Lenkverriegelung 1 weist einen Antriebsmotor 2, eine mit dem Antriebsmotor 2 gekoppelte Antriebsschneckenwelle 3 mit einer Schneckenwendel 6 und ein mit der Antriebsschneckenwelle 3 gekoppeltes Antriebsrad 4 auf, welches wiederum mit dem Sperrbolzen 5 bewegungsgekoppelt ist, so dass eine Antriebsbewegung der durch den Antriebsmotor 2 angetriebenen Antriebsschneckenwelle 3 zu einer Bewegung des Sperrbolzens 5 führt. Der Antriebsmotor 2 und die Antriebsschneckenwelle 3 mit der Schneckenwendel 6 definieren eine Antriebseinheit 7 der elektrischen Verriegelungsvorrichtung 1 (siehe zum Beispiel Figur 3), deren Funktionsweise aus dem Stand der Technik bekannt ist, weshalb auf eine nähere Erläuterung der Funktion verzichtet wird. Die Antriebseinheit 7 ist an einem Antriebsträger 8 (siehe Figur 4) angebracht, der von einem plattenförmigen Strukturelement 9 und einem Anschlagelement 10 gebildet ist, wie zum Beispiel in den Figuren 2, 3 und 4 zu erkennen ist, in denen zur besseren Übersichtlichkeit auf eine Darstellung des Antriebsrades 4 und des Sperrbolzens 5 verzichtet wurde.

Wie aus den Figuren 2, 3 und 4 ersichtlich ist, weist das plattenförmige Strukturelement 9 einen Aufnahmerahmen 11 auf, der den Antriebsmotor 2 lagefest aufnimmt. Auf seiner der Antriebsschneckenwelle 3 abgewandten Seite ist der Antriebsmotor 2 von einem Stützansatz 12 des Aufnahmerahmens 11 abgestützt. Der Aufnahmerahmen 11 weist eine Unterbrechung 14 (siehe zum Beispiel Figuren 2 und 4) auf, durch die sich die mit dem Antriebsmotor 2 gekoppelte Antriebsschneckenwelle 3 hindurch erstreckt. Das plattenförmige Strukturelement 9 weist neben dem Aufnahmerahmen 11 ferner eine Lagerstütze 16 auf, die das freie Ende 15 der Antriebsschneckenwelle 3, welches aus Figur 3 ersichtlich ist, drehbar lagert. Die Lagerstütze 16 weist eine senkrecht ausgeformte Wellenaufnahme 17 (siehe zum Beispiel Figur 2 oder 4) auf, in die bei Montage der Antriebsschneckenwelle 3 an dem Antriebsträger 8 das freie Ende 15 der Antriebsschneckenwelle 3 von oben in die Wellenaufnahme 17 eingebracht ist. Genauer gesagt wird bei Montage der elektrischen Lenkverriegelung 1 zunächst die Antriebseinheit 7 in das Strukturelement 9 eingesetzt, indem der Antriebsmotor 2 in den Aufnahmerahmen 11 unter Abstützung an dem Stützansatz 12 und das freie Ende 15 der Antriebsschneckenwelle 3 in die Wellenaufnahme 17 der Lagerstütze 16 eingesetzt werden, bevor dann unter anderem das Anschlagelement 10 montiert wird.

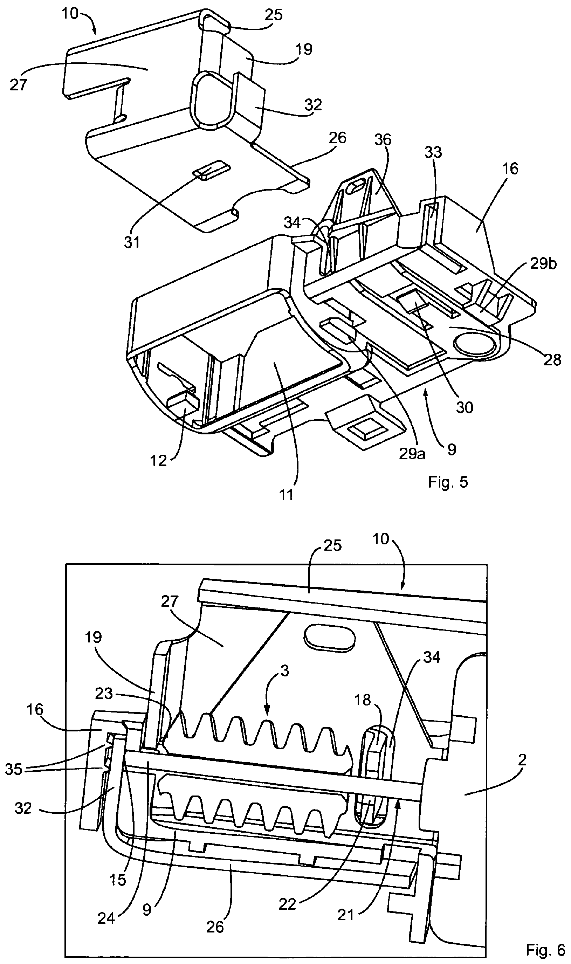

Das Anschlagelement 10, welches zum Beispiel im Detail in den Figuren 4 und 5 gezeigt ist, weist zur Einschränkung einer axialen Bewegung der Antriebsschneckenwelle 3 infolge von mechanischen Belastungen (in Figur 2 ist die Kraftrichtung anhand des Pfeils 20 für einen Entriegelungsvorgang exemplarisch eingezeichnet) eine erste Anschlagfläche 18 und eine zweite Anschlagfläche 32 auf, die sich im Wesentlichen parallel zueinander erstrecken. Die erste Anschlagfläche 18 ist im montierten Zustand des Anschlagelements 10 an dem Strukturelement 9 (siehe Figuren 1 und 2) zwischen dem Aufnahmerahmen 11 und der Lagerstütze 16 des Strukturelements 9 angeordnet. Genauer gesagt ist im montierten Zustand der elektrischen Lenkverriegelung 1 die erste Anschlagfläche 18 im Bereich eines zwischen der Schneckenwendel 6 und dem Antriebsmotor 2 liegender Abschnitt 21 der Antriebsschneckenwelle 3 angeordnet, wobei die erste Anschlagfläche 18 eine Aufnahmeausnehmung 22 aufweist, durch die dieser Abschnitt 21 der Antriebsschneckenwelle 3 sich hindurch erstreckt. Die Aufnahmeausnehmung 22 der ersten Anschlagfläche 18 verläuft im montierten Zustand der elektrischen Lenkverriegelung 1 im Wesentlichen parallel und horizontal zu dem plattenförmigen Strukturelement 9, so dass eine Bewegung der Antriebsschneckenwelle 3 senkrecht zum plattenförmigen Strukturelement 9 durch die erste Anschlagfläche 18 blockiert ist. Die erste Anschlagfläche 18 blockiert aber auch eine Bewegung der Antriebsschneckenwelle 3 in eine Richtung, die der Richtung des Pfeils 20 (siehe Figur 2) entgegengesetzt ist und eine für den Verriegelungsvorgang repräsentative Kraftrichtung der vorliegenden Lenkverriegelung 1 ist. Denn die Aufnahmeausnehmung 22 ist minimal größer als der Durchmesser der Antriebsschneckenwelle 3 dimensioniert, so dass eine Bewegung der Schneckenwendel 6 in Richtung des Antriebsmotors 2 spätestens durch die erste Anschlagfläche 18 gestoppt werden würde, an welcher die Schneckenwendel 6 dann anschlägt und anliegt. Die erste Anschlagfläche 18 stützt folglich die Antriebsschneckenwelle 3 über die Schneckenwendel 6 axial ab, wobei die Schneckenwendel 6 während des Verriegelungsvorgangs erfolgt und reibungsbehaftet ist, was einen Leistungsverlust nach sich zieht. Aber auch eine axiale Bewegung der Schneckenwendel 6 in die entgegengesetzte Richtung, d.h. in Richtung des Pfeils 20 in Figur 2 wird blockiert, indem dieser Bewegung die zweite Anschlagfläche 32 im Wege steht. Denn die Anschlagfläche 32 stützt die Antriebsschneckenwelle 3 axial über das freie Ende 15 (siehe Figur 3) ab, wobei diese Anlage während des Entriegelungsvorgangs erfolgt und mit geringeren Reibungs- und damit Leistungsverlusten als während des Verriegelungsvorgangs behaftet ist. Die zweite Anschlagfläche 32 blockiert die axiale Bewegung des freien Endes 15 der Antriebsschneckenwelle 3, wie beispielsweise aus Figur 3 oder 6 ersichtlich ist. Die Schneckenwendel 6 ist folglich zwischen der ersten und der zweiten Anschlagfläche 18 und 32 angeordnet, so dass eine axiale Bewegung der Schneckenwendel 6 mit Hilfe des Anschlagelements 10 in beide Axialrichtungen blockiert ist.

Das Anschlagelement 10 weist darüber hinaus eine dritte Anschlagfläche 19 auf. Wie aus Figur 6 ersichtlich ist, ist ein das freie Ende 15 aufweisender wendelfreier Abschnitt 24 der Antriebsschneckenwelle 3 zwischen dem plattenförmigen Strukturelement 9 und der dritten Anschlagfläche 19 angeordnet, so dass eine Bewegung des freien Endes 15 der Antriebsschneckenwelle 3 aus der Wellenaufnahme 17 der Lagerstütze 16 heraus mit Hilfe der dritten Anschlagfläche 19 verhindert wird, indem die dritte Anschlagfläche 19 eine Bewegung des freien Endes 15 der Antriebsschneckenwelle 3 in senkrechter Richtung zu dem Strukturelement 9 blockiert. Folglich ist die dritte Anschlagfläche 19 nach Art eines Radialanschlags ausgebildet und verhindert eine Bewegung des freien Endes 15 der Antriebsschneckenwelle 3 radial zu deren Längserstreckung aus der Lagerstütze 16 heraus. Die dritte Anschlagfläche 19 ist mit Bezug auf die Längserstreckung der Antriebsschneckenwelle 3 zwischen der ersten Anschlagfläche 18 und der zweiten Anschlagfläche 32 angeordnet, wobei die Schneckenwendel 6 zwischen der ersten und dritten Anschlagfläche 18, 19 angeordnet ist.

Das Anschlagelement 10 ist - wie aus den vorstehenden Ausführungen ersichtlich sein sollte - an dem plattenförmigen Strukturelement 9 demontierbar befestigt. Wie zum Beispiel in Figur 4 und 5 gezeigt ist, ist das Anschlagelement 10 im Wesentlichen im Querschnitt U-förmig mit einem ersten Schenkel 25, einem dem ersten Schenkel gegenüberliegenden zweiten Schenkel 26 und einem den ersten Schenkel 25 mit dem zweiten Schenkel 26 verbindenden Steg 27 ausgebildet. Im zusammengebauten Zustand der elektrischen Lenkverriegelung 1 überdeckt der erste Schenkel 25 des Anschlagelements 10 die Antriebsschneckenwelle 3, die zwischen dem plattenförmigen Strukturelement 9 und dem ersten Schenkel 25 des Anschlagelements 10 angeordnet ist. Der erste Schenkel 25 des

U-förmigen Anschlagelements 10 überdeckt somit die Antriebsschneckenwelle 3 zu ihrer dem plattenförmigen Strukturelement 9 abgewandten Seite. Ferner deckt der Steg 27 des Anschlagelements 10 die Antriebsschneckenwelle 3 seitlich ab, wie zum Beispiel in Figur 2 zu erkennen ist. Diese abdeckende und überdeckende Ausbildung dient dem Diebstahlschutz und soll einen gewaltsamen Zugang zum Sperrbolzen 5 verhindern. Die erste Anschlagfläche 18 und/oder die dritte Anschlagfläche 19 sind am Steg 27 des Anschlagelements 10 angeformt und erstrecken sich im Wesentlichen parallel zum ersten und zweiten Schenkel 25, 26. Ferner ist die zweite Anschlagfläche 32 an dem zweiten Schenkel 26 angeformt und erstreckt sich in Richtung des ersten Schenkels 25.

Der zweite Schenkel 26 des U-förmigen Anschlagelements 10 ist im zusammengebauten Zustand der elektrischen Lenkverriegelung 1 auf der der Antriebsschneckenwelle 3 angewandten Seitenfläche 28 (siehe Figur 5) des plattenförmigen Strukturelements 9 angeordnet. Der zweite Schenkel 26 weist gegenüber dem ersten Schenkel 25 eine größere Längserstreckung auf und ist an der Seitenfläche 28 des Strukturelements 9 mittels Rastmitteln 29a, 29b und 30 demontierbar angebracht. Zu diesem Zweck wird der zweite Schenkel 26 des Anschlagelements 10 seitlich entlang der Seitenfläche 28 des Strukturelements 9 geschoben und gelangt dabei zwischen die zwei Haltearme 29a, 29b (als Rastmittel) und die eigentliche Seitenfläche 28. Um ein Herausgleiten des zweiten Schenkels 26 aus dieser Position zu verhindern, ist ein elastischer Rastarm 30 als weiteres Rastmittel vorgesehen, der mit einer in dem zweiten Schenkel 26 des Anschlagelements 10 ausgebildeten Eingriffsöffnung 31 in Eingriff steht.

Neben der ersten und dritten Anschlagfläche 18, 19 weist das Anschlagelement 10 die zweite Anschlagfläche 32 auf, die seitlich von der dritten Anschlagfläche 19 angeordnet ist. Die zweite Anschlagfläche 32 ist seitlich an dem zweiten Schenkel 26 des Anschlagelements 10 angeformt und erstreckt sich parallel zu dem Steg 27 in Richtung des ersten Schenkels 25. Die dritte Anschlagfläche 19 ist hingegen seitlich an dem Steg 27 bzw. an einem Seitenrand des Stegs 27 angeformt und erstreckt sich parallel zu dem zweiten Schenkel 26 sowie zwischen dem ersten und zweiten Schenkel 25, 26. Ferner ist die erste Anschlagfläche 18 an dem anderen Seitenrand des Stegs 27 angeformt und erstreckt sich parallel zu der zweiten Anschlagfläche 32 zwischen dem ersten und zweiten Schenkel 25, 26.

Wie zuvor ausgeführt, ist die zweite Anschlagfläche 32 seitlich auf der Seite der dritten Anschlagfläche 19 angeordnet, die der ersten Anschlagfläche 18 abgewandt ist. Die zweite Anschlagfläche 32 ist in den Figuren 1 und 2 nicht zu erkennen, da sie bei Montage des Anschlagelements 10 an dem Strukturelement 9 in einen seitlichen Schlitz 33 (siehe zum Beispiel Figur 5) der Lagerstütze 16 eingeschoben ist, wie in der Schnittdarstellung der Figur 6 zu erkennen ist. Die zweite Anschlagfläche 32 bildet einen Axialanschlag für das freie Ende 15 der Antriebsschneckenwelle 3, so dass das freie Ende 15 bei einem Entriegelungsvorgang mit Kraft- und Auslenkungswirkung in Richtung des Pfeils 20 in Figur 2 an die zweite Anschlagfläche 32 anschlägt und eine Bewegung der Antriebsschneckenwelle 3 in Richtung des Pfeils 20 gestoppt wird. Die zweite Anschlagfläche 32 dient folglich der axialen Bewegungsbegrenzung der Antriebsschneckenwelle 3, wenn die zweite Anschlagfläche 32 in den seitlichen Schlitz 33 der Lagerstütze 16 eingeschoben ist. Damit die zweite Anschlagfläche 32 nicht direkt auf das Strukturelement 9 wirkt, wenn sich die Antriebsschneckenwelle 3 bei einem Ver- oder Entriegelungsvorgang in ihrer Achsrichtung bewegt bzw. verschiebt, sind in dem Schlitz 33 der Lagerstütze 16 Klemmzähne 35 vorgesehen, die zum einen die zweite Anschlagfläche 32 im Schlitz 33 fixieren, die aber auch andererseits eine Auslenkung der zweiten Anschlagfläche 32 in Richtung der Lagerstütze 16 puffern und dämpfen.

Es sei noch angemerkt, dass das Strukturelement 9 im Bereich der Antriebsschneckenwelle 3 eine zur Erhöhung der mechanischen Festigkeit dienende Verstärkungswandung 36 aufweist, die über eine Durchgangsöffnung 34 verfügt, durch die sich im zusammengebauten Zustand der elektrischen Lenkverriegelung 3 die erste Anschlagfläche 18 des Anschlagelements 10 hindurch erstreckt. Der Steg 27 des Anschlagelements 10 liegt an der der Antriebsschnecke 3 abgewandten Seitenfläche der Verstärkungswandung 35 an dieser an.

Zur Reduzierung des Gesamtgewichts der elektrischen Lenkverriegelung und zur Senkung der Materialkosten ist erfindungsgemäß vorgesehen, dass das Strukturelement 9 aus einem anderen Material als das Anschlagelement 10 hergestellt ist. Es bietet sich an, das Strukturelement 9 aus Kunststoff in einem kostengünstigen Spritzgussverfahren herzustellen. Demgegenüber ist für das Anschlagelement 10 eine im Vergleich zu dem Strukturelement 9 erhöhte Stabilität und verringerte Temperaturempfindlichkeit gefordert, so dass das Anschlagelement 10 als Blechteil aus Metall oder einer Metalllegierung, wie zum Beispiel Zamak, hergestellt ist.

Zusammengefasst ist vorstehend ein erfindungsgemäßer Antriebsträger 8 für eine Antriebseinheit 7 beschrieben. Der erfindungsgemäße Antriebsträger 8 ist insbesondere für eine elektrische Lenkverriegelung 1 verwendbar und umfasst das Strukturelement 9 mit dem Aufnahmerahmen 11, der den Antriebsmotor 2 der Antriebseinheit 7 lagefest aufnimmt, und einer Lagerstütze 16, die das freie Ende 15 der mit dem Antriebsmotor 2 gekoppelten Antriebsschneckenwelle 3 drehbar lagert. Das Anschlagelement 10 schränkt die axiale Bewegung der Antriebsschneckenwelle 3 ein und umfasst zumindest die erste Anschlagfläche 18 und die zweite Anschlagfläche 32. Ferner ist das Anschlagelement 10 an dem plattenförmigen Strukturelement 9 demontierbar befestigt, wobei das Strukturelement 9 aus einem anderen Material als das Anschlagelement 10 hergestellt ist.

Der erfindungsgemäße Gegenstand stützt die Antriebsschneckenwelle 3 in axialer Richtung bzw. in Richtung des freien Endes 15 (in Richtung des Pfeils 20 in Figur 2) im Fall, dass die elektrische Lenkverriegelung entriegelt, ab, wobei nur eine geringe Reibung bei diesem Vorgang vorhanden ist. Die Abstützung in axialer Richtung wird hierbei über das als Blechbiegeteil ausgeformtes Anschlagelement 10 und insbesondere über dessen zweite Anschlagfläche 32 gebildet, wobei in radialer Richtung, d.h. senkrecht von dem Strukturelement 9 weg weisend, die Abstützung von der dritten Anschlagfläche 19 gebildet ist. Ferner wird die Abstützung in entgegengesetzter axialer Richtung von der ersten Anschlagfläche 18 gebildet, wenn die elektrische Lenkverriegelung 1 verriegelt.

## Patentansprüche

1. Antriebsträger (8) für eine Antriebseinheit (7), insbesondere für eine elektrische Lenkverriegelung (1), aufweisend
ein plattenförmiges Strukturelement (9) mit einem Aufnahmerahmen (11), der einen Antriebsmotor (2) der Antriebseinheit (7) lagefest aufnehmen kann, und einer Lagerstütze (16), die das freie Ende (15) einer mit dem Antriebsmotor (2) gekoppelten Antriebsschneckenwelle (3) drehbar lagern kann, und
ein Anschlagelement (10), welches zumindest eine axiale Bewegung der Antriebsschneckenwelle (3) einschränken kann,
wobei das Anschlagelement (10) eine erste Anschlagfläche (18), welche zwischen dem Aufnahmerahmen (11) und der Lagerstütze (16) des Strukturelements (9) angeordnet ist, und eine zweite Anschlagfläche (32), welche nach Art eines Axialanschlags für das dem freien Ende (15) der Antriebsschneckenwelle (3) zugewandte Ende (23) der Schneckenwendel (6) dienend ausgebildet ist, aufweist,
**dadurch gekennzeichnet, dass** das Anschlagelement (10) an dem plattenförmigen Strukturelement (9) demontierbar befestigt ist und dass das Strukturelement (9) aus einem anderen Material als das Anschlagelement (10) hergestellt ist, dass das Strukturelement (9) aus Kunststoff hergestellt ist und dass das Anschlagelement (10) aus Metall oder einer Metalllegierung hergestellt ist.

2. Elektrische Lenkverriegelung (1) für ein Kraftfahrzeug, aufweisend eine Antriebseinheit (7), die einen Antriebsmotor (2) und eine Antriebsschneckenwelle (3) umfasst, ein mit der Antriebsschneckenwelle (3) bewegungsgekoppeltes Antriebsrad (4) und einen mit dem Antriebsrad (4) verbundenen Sperrbolzen (5),
**gekennzeichnet durch** einen zumindest die Antriebseinheit (7) tragenden Antriebsträger (8) nach Anspruch 1.

3. Elektrische Lenkverriegelung (1) nach Anspruch 2, **dadurch gekennzeichnet, dass** das Anschlagelement (10) eine dritte Anschlagfläche (19) aufweist, die nach Art eines Radialanschlags eine Bewegung des freien Endes (15) der Antriebsschneckenwelle (3) radial zu deren Längserstreckung verhindernd ausgebildet ist.

4. Elektrische Lenkverriegelung (1) nach Anspruch 2 oder 3, **dadurch gekennzeichnet, dass** die dritte Anschlagfläche (19) mit Bezug auf die Längserstreckung der Antriebsschneckenwelle (3) zwischen der ersten Anschlagfläche (18) und der zweiten Anschlagfläche (32) angeordnet ist, wobei die Schneckenwendel (6) zwischen der ersten und dritten Anschlagfläche (18, 19) angeordnet ist.

5. Elektrische Lenkverriegelung (1) nach einem der Ansprüche 2 bis 4, **dadurch gekennzeichnet, dass** die Lagerstütze (16) einen seitlichen Schlitz (33) aufweist, in welchen die zweite Anschlagfläche (32) des Anschlagelements (10) zur axialen Bewegungsbegrenzung der Antriebsschneckenwelle (3) eingeschoben ist.

6. Elektrische Lenkverriegelung (1) nach einem der Ansprüche 2 bis 5, **dadurch gekennzeichnet, dass** das Anschlagelement (10) im Wesentlichen U-förmig mit einem ersten Schenkel (25), einem dem ersten Schenkel (25) gegenüberliegenden zweiten Schenkel (26) und einem den ersten Schenkel (25) mit dem zweiten Schenkel (26) verbindenden Steg (27) ausgebildet ist, wobei die Antriebsschneckenwelle (3) zwischen dem ersten Schenkel (25) des U-förmigen Anschlagelements (10), welcher die Antriebsschneckenwelle (3) überdeckt, und dem plattenförmigen Strukturelement (9) angeordnet ist.

7. Elektrische Lenkverriegelung (1) nach Anspruch 6, **dadurch gekennzeichnet, dass** der zweite Schenkel (26) des U-förmigen Anschlagelements (10) auf der der Antriebsschneckenwelle (3) abgewandten Seitenfläche (28) des plattenförmigen Strukturelements (9) angeordnet ist und dort mit Hilfe von Rastmitteln (29a, 29b, 30, 31) mit dem Strukturelement (9) in Eingriff steht.

8. Elektrische Lenkverriegelung (1) nach Anspruch 6 oder 7, **dadurch gekennzeichnet, dass** die erste Anschlagfläche (18) und/oder die dritte Anschlagfläche (19) am Steg (27) des Anschlagelements (10) angeformt sind und sich im Wesentlichen parallel zum ersten und zweiten Schenkel (25, 26) erstrecken.

9. Elektrische Lenkverriegelung (1) nach Anspruch 6, 7 oder 8, **dadurch gekennzeichnet, dass** die zweite Anschlagfläche (32) an dem zweiten Schenkel (26) angeformt ist und sich in Richtung des ersten Schenkels (25) erstreckt.

10. Elektrische Lenkverriegelung (1) nach einem der Ansprüche 2 bis 9, **dadurch gekennzeichnet, dass** die erste Anschlagfläche (18) des Anschlagelements (10) eine im Wesentlichen parallel zum plattenförmigen Strukturelement (9) verlaufende und eine Bewegung der Antriebsschneckenwelle (3) senkrecht zum plattenförmigen Strukturelement (9) blockierende Aufnahmeausnehmung (22) aufweist, in welche ein zwischen der Schneckenwendel (6) und dem Antriebsmotor (2) liegender Abschnitt (21) der Antriebsschneckenwelle (3) angeordnet ist.

11. Elektrische Lenkverriegelung (1) nach einem der Ansprüche 2 bis 10, **dadurch gekennzeichnet, dass** ein das freie Ende (15) aufweisender wendelfreier Abschnitt (24) der Antriebsschneckenwelle (3) zwischen dem plattenförmigen Strukturelement (9) und der dritten Anschlagfläche (19) angeordnet ist, so dass eine Bewegung des freien Endes (15) der Antriebsschneckenwelle (3) aus der Lagerstütze (16) heraus mit Hilfe der dritten Anschlagfläche (19) blockiert ist.

## Claims

1. A drive mount (8) for a drive unit (7), in particular for an electrical steering lock (1), having
a plate-form structural element (9) with a mounting frame (11), which can accommodate a drive motor (2) of the drive unit (7) in a fixed location, and a bearing support (16), which can support the free end (15) of a worm driveshaft (3), coupled with the drive motor (2), such that it can rotate, and
a stop element (10), which can limit at least an axial movement of the worm driveshaft (3), wherein
the stop element (10) has a first stop face (18), which is arranged between the mounting frame (11) and the bearing support (16) of the structural element (9), and a second stop face (32), which is designed so as to serve as a type of axial stop for the end (23) of the worm screw (6) facing towards the free end (15) of the worm driveshaft (3),
**characterised in that** the stop element (10) is attached to the plate-form structural element (9) such that it can be disassembled and **in that** the structural element (9) is manufactured from a material other than that of the stop element (10), **in that** the structural element (9) is manufactured from plastic and **in that** the stop element (10) is manufactured from a metal or a metal alloy.

2. An electrical steering lock (1) for a motor vehicle, having a drive unit (7) which comprises a drive motor (2) and a worm driveshaft (3), a drive gear (4) coupled in its movement with the worm driveshaft (3), and a locking pin (5) connected with the drive gear (4),
**characterised by** a drive mount (8) in accordance with claim 1, supporting at least the drive unit (7).

3. The electrical steering lock (1) in accordance with claim 2, **characterised in that** the stop element (10) has a third stop face (19), which is designed as a type of radial stop preventing any movement of the free end (15) of the worm driveshaft (3) radially with respect to its longitudinal extent.

4. The electrical steering lock (1) in accordance with claim 2 or 3, **characterised in that** with respect to the longitudinal extent of the worm driveshaft (3) the third stop face (19) is arranged between the first stop face (18) and the second stop face (32), wherein the worm screw (6) is arranged between the first and second stop faces (18, 19).

5. The electrical steering lock (1) in accordance with one of the claims 2 to 4, **characterised in that** the bearing support (16) has a lateral slot (33), into which is inserted the second stop face (32) of the stop element (10) for purposes of limiting the axial movement of the worm driveshaft (3).

6. The electrical steering lock (1) in accordance with one of the claims 2 to 5, **characterised in that** the stop element (10) is designed essentially in a U-shape, with a first arm (25), a second arm (26) located opposite to the first arm (25), and a web (27) connecting the first arm (25) with the second arm (26), wherein the worm driveshaft (3) is arranged between the first arm (25) of the U-form stop element (10), which covers the worm driveshaft (3), and the plate-form structural element (9).

7. The electrical steering lock (1) in accordance with claim 6, **characterised in that** the second arm (26) of the U-form stop element (10) is arranged on the side face (28) of the plate-form structural element (9) facing away from the worm driveshaft (3), and is there in engagement with the structural element (9), with the aid of the latching agents (29a, 29b, 30, 31).

8. The electrical steering lock (1) in accordance with claim 6 or 7, **characterised in that** the first stop face (18) and/or the third stop face (19) are formed on the web (27) of the stop element (10), and extend essentially parallel to the first and second arms (25, 26).

9. The electrical steering lock (1) in accordance with claim 6, 7 or 8, **characterised in that** the second stop face (32) is formed on the second arm (26), and extends in the direction of the first arm (25).

10. The electrical steering lock (1) in accordance with one of the claims 2 to 9, **characterised in that** the first stop face (18) of the stop element (10) has an accommodation recess (22) running essentially parallel to the plate-form structural element (9), and blocking any movement of the worm driveshaft (3) at right angles to the plate-form structural element (9), in which accommodation recess (22) is arranged a section (21) of the worm driveshaft (3) located between the worm screw (6) and the drive motor (2).

11. The electrical steering lock (1) in accordance with one of the claims 2 to 10, **characterised in that** a section (24) of the worm driveshaft (3) without any screw form, having the free end (15), is arranged between the plate-form structural element (9) and the third stop face (19), such that any movement of the free end (15) of the worm driveshaft (3) out of the bearing support (16) is blocked with the aid of the third stop face (19).

## Revendications

1. Support d'entraînement (8) pour une unité d'entraînement (7), en particulier pour un verrouillage électrique de direction (1), comportant
un élément structurel en forme de plateau (9) avec un cadre de réception (11) apte à recevoir fixement un moteur d'entraînement (2) de l'unité d'entraînement (7), et avec un support de palier (16) apte à supporter de façon rotative l'extrémité libre (15) d'un arbre à vis d'entraînement (3) accouplé au moteur d'entraînement (2), et
un élément de butée (10) capable de limiter au moins un déplacement axial de l'arbre à vis d'entraînement (3),
dans lequel l'élément de butée (10) comporte une première surface de butée (18) disposé entre le cadre de réception (11) et le support de palier (16) de l'élément structurel (9), et une deuxième surface de butée (32) conçue de manière à servir de butée axiale pour l'extrémité (23) de l'hélice (6) tournée vers l'extrémité libre (15) de l'arbre à vis d'entraînement (3),
**caractérisé en ce que** l'élément de butée (10) est fixé de façon démontable sur l'élément structurel (9) en forme de plateau, et **en ce que** l'élément structurel (9) est constitué d'un autre matériau que l'élément de butée (10), **en ce que** l'élément structurel (9) est constitué de plastique et **en ce que** l'élément de butée (10) est constitué de métal ou d'un alliage de métaux.

2. Verrouillage électrique de direction (1) pour un véhicule automobile, comportant une unité d'entraînement (7) comprenant un moteur d'entraînement (2) et un arbre à vis d'entraînement (3), une roue d'entraînement (4) accouplée cinématiquement à l'arbre à vis d'entraînement (3) et un boulon de blocage (5) relié à la roue d'entraînement (4),
**caractérisé par** un support d'entraînement (8) selon la revendication 1, lequel supporte au moins l'unité d'entraînement (7).

3. Verrouillage électrique de direction (1) selon la revendication 2, **caractérisé en ce que** l'élément de butée (10) comporte une troisième surface de butée (19) conçue à la façon d'une butée radiale empêchant un déplacement de l'extrémité libre (15) de l'arbre à vis d'entraînement (3) radialement à l'étendue longitudinale de celui-ci.

4. Verrouillage électrique de direction (1) selon la revendication 2 ou 3, **caractérisé en ce que** la troisième surface de butée (19) est disposée entre la première surface de butée (18) et la deuxième surface de butée (32) par rapport à l'étendue longitudinale de l'arbre à vis d'entraînement (3), l'hélice (6) étant disposée entre la première et la troisième surface de butée (18, 19).

5. Verrouillage électrique de direction (1) selon l'une des revendications 2 à 4, **caractérisé en ce que** le support de palier (16) comporte une fente latérale (33) dans laquelle est insérée la deuxième surface de butée (32) de l'élément de butée (10), pour limiter le déplacement axial de l'arbre à vis d'entraînement (3).

6. Verrouillage électrique de direction (1) selon l'une des revendications 2 à 5, **caractérisé en ce que** l'élément de butée (10) est conçu essentiellement en forme de U, avec une première branche (25) une deuxième branche (26) opposée à la première branche (25), et une âme (27) reliant la première branche (25) à la deuxième branche (26), l'arbre à vis d'entraînement (3) étant disposée entre la première branche (25) de l'élément de butée (10) en forme de U, laquelle recouvre l'arbre à vis d'entraînement (3), et l'élément structurel (9) en forme de plateau.

7. Verrouillage électrique de direction (1) selon la revendication 6, **caractérisé en ce que** la deuxième branche (26) de l'élément de butée (10) en forme de U se trouve sur la surface latérale (28) de l'élément structurel en forme de plateau (9) qui est détournée de l'arbre à vis d'entraînement (3), où elle vient se mettre en prise avec l'élément structurel (9) à l'aide de moyens d'encliquetage (29a, 29b, 30, 31).

8. Verrouillage électrique de direction (1) selon la revendication 6 ou 7, **caractérisé en ce que** la première surface de butée (18) et/ou la troisième surface de butée (19) est/sont formés sur l'âme (27) de l'élément de butée (10), et s'étend/s'étendent essentiellement parallèlement à la première et à la deuxième branche (25, 26).

9. Verrouillage électrique de direction (1) selon la revendication 6, 7 ou 8, **caractérisé en ce que** la deuxième surface de butée (32) est formée sur la deuxième branche (26) et s'étend dans la direction de la première branche (25).

10. Verrouillage électrique de direction (1) selon l'une des revendications 2 à 9, **caractérisé en ce que** la première surface de butée (18) de l'élément de butée (10) comporte un évidement de réception (22) s'étendant essentiellement parallèlement à l'élément structurel en forme de plateau (9) et bloquant un déplacement de l'arbre à vis d'entraînement (3) perpendiculairement à l'élément structurel en forme de plateau (9), dans lequel est disposée une section (21) de l'arbre à vis d'entraînement (3) située entre l'hélice (6) et le moteur d'entraînement (2).

11. Verrouillage électrique de direction (1) selon l'une des revendications 2 à 10, **caractérisé en ce qu'**une section (24) de l'arbre à vis d'entraînement (3) sans hélice et présentant l'extrémité libre (15) est disposée entre l'élément structurel en forme de plateau (9) et la troisième surface de butée (19), de manière à bloquer un déplacement de l'extrémité libre (15) de l'arbre à vis d'entraînement (3) hors du support de palier (16) à l'aide de la troisième surface de butée (19).
